# EUROPÄISCHE PATENTANMELDUNG

(11) **EP 4 098 481 A1**
(43) Veröffentlichungstag der Anmeldung: **07.12.2022**
(21) Anmeldenummer: 21177504.4
(22) Anmeldetag: 02.06.2021
(51) Int. Cl.: B60L 55/00, B60L 53/60, H02J 3/14

(54) **VERFAHREN UND VORRICHTUNG ZUM LASTMANAGEMENT BEIM LADEN VON ELEKTRISCHEN FAHRZEUGEN ODER BEI DER RÜCKSPEISUNG VON STROM AUS ELEKTRISCHEN FAHRZEUGEN ZURÜCK IN DAS STROMNETZ BEI EINEM SYSTEM UMFASSEND ZUMINDEST ZWEI LADESTATIONEN**

(71) Anmelder: Digital Elektronik GmbH, 5083 St. Leonhard/Salzburg (AT)
(72) Erfinder: Steinbacher, Andreas, 5082 Grödig (AT); Taferl, Johann Wolfgang, 5202 Neumarkt am Wallersee (AT); Hutegger, Alois Josef, 5412 Puch bei Hallein (AT); Auer, Johannes, 5020 Salzburg (AT)
(74) Vertreter: Karakatsanis, Georgios

(57) **Zusammenfassung**

Es wird ein Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen, vorgeschlagen, wobei die Ladestationen Ausgangskontakte (K1, K2, K3) aufweisen, welche den Außenleiterkontakten der Ladestecker der elektrischen Fahrzeuge zugeordnet sind, in Rahmen dessen in Abhängigkeit der Gesamtbelastung jeder Phase die Phasen an die Ausgangskontakte (K1, K2, K3) mittels einer in jeder Ladestation vorgesehenen Vorrichtung zum Lastmanagement, die als Vorrichtung zur Phasenumschaltung (1) ausgeführt ist, umgeschaltet werden, derart, dass eine Schieflast reduziert wird.

## Beschreibung

Die vorliegende Erfindung bezieht sich auf ein Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen gemäß dem Oberbegriff des Patentanspruchs 1. Ferner bezieht sich die Erfindung auf eine Vorrichtung zum Lastmanagement beim Laden von elektrischen Fahrzeugen oder bei der Rückspeisung von Strom aus elektrischen Fahrzeugen zurück in das Stromnetz, insbesondere auf eine Vorrichtung zur Durchführung des erfindungsgemäßen Verfahrens.

Aus dem Stand der Technik ist bekannt, die Batterien elektrischer Fahrzeuge über ein Ladekabel aufweisend einen Ladestecker mittels Ladestationen zu laden, wobei die Ladestationen dreiphasig betrieben werden und den drei Außenleiterkontakten des Ladesteckers im angeschlossenen Zustand jeweils eine Phase fest zugeordnet ist. Die Außenleiterkontakte der Ladestecker werden als L1, L2 und L3 Außenleiterkontakte bezeichnet.

Nach dem Stand der Technik werden viele Elektroautos einphasig geladen, was über den ersten Außenleiterkontakt L1 des Ladesteckers erfolgt, an dem immer seitens der Ladestation über den korrespondierenden Ausgangskontakt die gleiche Phase anliegt. Dies resultiert insbesondere bei mehreren Ladestationen in einer ungewünschten Schieflast, d.h. in einer Leistungsentnahme, die nicht auf alle drei Phasen gleichverteilt ist, die das jeweilige EVU (Energieversorgungsunternehmen) eigentlich nicht zulässt.

Der Strom an einer Phase ist begrenzt. Laden mehrere Elektroautos einphasig an den Ladestationen, kann es passieren, dass der benötigte Gesamtstrom an einer Phase die zulässige Last, d.h. den zulässigen Strom an dieser Phase überschreiten würde. Aus dem Stand der Technik ist bekannt, eine Überlastung der Phase durch Reduzierung des Ladestroms an allen angeschlossenen Fahrzeugen zu vermeiden, was in nachteiliger Weise in einer signifikanten Verzögerung des Ladevorgangs resultiert. Eine Schieflast ist noch immer vorhanden, aber der mögliche Gesamtstrom wird nicht überschritten.

Ferner ist aus dem Stand der Technik bekannt, im Rahmen sogenannter Vehicle to grid Verfahren, Strom aus den Akkus elektrischer Fahrzeuge zurück in das öffentliche Stromnetz abzugeben. Diese Vorgehensweise resultiert bei Fahrzeugen, die auch einphasig Strom zurück in das öffentliche Stromnetz abgeben, insbesondere bei mehreren Ladestationen, in einer ungewünschten Schieflast, d.h. in einer Leistungsabgabe, die nicht auf alle drei Phasen gleichverteilt ist. Das gleiche Problem kann auch bei Ladestationsystemen auftreten, bei denen sowohl ein Laden elektrischer Fahrzeuge als auch eine Rückspeisung von Strom möglich ist.

Der vorliegenden Erfindung liegt die Aufgabe zugrunde, ein Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen anzugeben, im Rahmen dessen eine Schieflast bei möglichst hohem Ladestrom an allen angeschlossenen elektrischen Fahrzeugen reduziert oder vermieden wird. Ferner soll eine Vorrichtung zum Lastmanagement oder bei der Rückspeisung von Strom aus elektrischen Fahrzeugen zurück in das Stromnetz beim Laden von elektrischen Fahrzeugen, insbesondere eine Vorrichtung zur Durchführung des erfindungsgemäßen Verfahrens angegeben werden.

Diese Aufgabe wird für ein Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen durch die Merkmale des Patentanspruchs 1 gelöst. Eine Vorrichtung zum Lastmanagement beim Laden von elektrischen Fahrzeugen oder bei der Rückspeisung von Strom aus elektrischen Fahrzeugen zurück in das Stromnetz, insbesondere eine Vorrichtung zur Durchführung des erfindungsgemäßen Verfahrens ist Gegenstand des Patentanspruchs 8. Weitere erfindungsgemäße Ausgestaltungen und Vorteile gehen aus den entsprechenden Unteransprüchen hervor.

Demnach wird ein Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen vorgeschlagen, wobei die Ladestationen Ausgangskontakte aufweisen, welche den Außenleiterkontakten der Ladestecker der elektrischen Fahrzeuge zugeordnet sind, im Rahmen dessen in Abhängigkeit der Gesamtbelastung jeder Phase die Phasen an die Ausgangskontakte K1, K2, K3 mittels einer in jeder Ladestation vorgesehenen Vorrichtung zum Lastmanagement, die als Vorrichtung zur Phasenumschaltung ausgeführt ist, umgeschaltet werden, derart, dass eine Schieflast reduziert wird.

Vorzugsweise ist vorgesehen, dass die Stromversorgung zu den Ausgangskontakten einer Ladestation vor einer Phasenumschaltung getrennt und nach der Umschaltung wieder aktiviert werden kann. Dadurch kann insbesondere in vorteilhafter Weise eine Phasenumschaltung auch während eines Ladevorgangs durchgeführt werden.

Gemäß einer Ausgestaltung der Erfindung ist vorgesehen, dass, wenn ein Lade- oder Rückspeisungsvorgang bei einer der Ladestationen des Systems beginnt oder beendet wird
a) die Gesamtbelastung jeder Phase ermittelt wird, wobei
b) anhand der Gesamtbelastung der Phasen die Phasen nach Belastung (LOW, MID, HIGH) sortiert werden und
c) drei Phasenpaare (HIGH, LOW), (HIGH, MID) und (MID, LOW) gebildet werden, wobei die Phasenpaare jeweils den Index m= 0, 1, 2 aufweisen, wobei
d) anschließend beginnend bei m=0 für ein Phasenpaar folgende Schritte durchgeführt werden:
e) Ermitteln der Phase H mit der höheren Belastung und der Phase L mit der niedrigeren Belastung;
f) Ermitteln der Liste LIST der Ladestationen, welche einphasig auf der Phase H mit der höheren Belastung laden oder Strom zurückspeisen, wobei N die Anzahl der Ladestationen in der Liste LIST ist und n der Index dieser Ladestationen, wobei die erste Ladestation den Index n=0 aufweist;
g) beginnend bei n=0 in der Liste LIST Bilden der Summe I_{L} + I_{C}, wobei I_{L} der Strom ist, mit dem die Phase L belastet wird und I_{C} der Strom ist, der von der Ladestation aufgenommen oder an die Ladestation abgegeben wird, wobei,
h) wenn die Summe I_{L} + I_{C} kleiner ist, als der Strom I_{H}, mit dem die Phase H belastet ist, erkannt wird, dass durch eine Phasenumschaltung von der Phase H auf die Phase L eine Lastoptimierung erzielt wird, eine Phasenumschaltung durchgeführt wird und zum Schritt a) übergegangen wird, wobei, wenn die Summe I_{L} + I_{C} nicht kleiner ist, als der Strom I_{H}, mit dem die Phase H belastet ist, die nächste Ladestation in der Liste LIST betrachtet wird und zum Schritt g) für die nächste Ladestation in der Liste LIST übergegangen wird, wenn der Index N der nächsten Ladestation kleiner als N ist, wobei wenn alle Ladestationen in der Liste LIST betrachtet worden sind, das nächste Phasenpaar betrachtet wird, wenn der Index m des nächsten Phasenpaares kleiner als 3 ist, wobei, wenn der Index m des nächsten Phasenpaares nicht kleiner als 3 ist, alle Phasenpaare betrachtet worden sind und optional alle freien Ladestationen - falls vorhanden - derart eingestellt werden, dass die Phase MIN mit der niedrigsten Gesamtlast an dem dem L1-Außenleiterkontakt des Ladesteckers zugeordneten Ausgangskontakt anliegt, wobei die nächst geringbelastete Phase MID an dem dem L2-Außenleiterkontakt des Ladesteckers zugeordneten Ausgangskontakt anliegt und die am höchsten belastete Phase HIGH am verbleibenden L3-Außenleiterkontakt des Ladesteckers anliegt.

Gemäß einer Ausgestaltung der Erfindung werden die Vorrichtungen zur Phasenumschaltung durch eine der Ladestationen, welche als Master dient, gesteuert, wobei die Gesamtbelastung jeder Phase entweder über Messabnehmer direkt am Netztransformator des Energieversorgungsunternehmens kontinuierlich oder in vorgegebenen Zeitabständen gemessen und per Telemetrie an die als Master dienende Ladestation übermittelt wird oder wobei in jeder Ladestation die aktuelle Einzellast der Ladestation pro Phase eingangs- oder ausgangsseitig kontinuierlich oder in vorgegebenen Zeitabständen gemessen und an die als Master dienende Ladestation zur Ermittlung der Gesamtbelastung jeder Phase übermittelt wird. Die Ladestationen sind über ein Datenübertragungssystem, z.B. über einen Datenbus, zum Zweck der Datenkommunikation miteinander verbunden.

Gemäß einer weiteren Ausgestaltung der Erfindung werden die Vorrichtungen zur Phasenumschaltung durch einen datentechnisch mit den Ladestationen verbundenen Server gesteuert, wobei die Gesamtbelastung jeder Phase entweder über Messabnehmer direkt am Netztransformator des Energieversorgungsunternehmens kontinuierlich oder in vorgegebenen Zeitabständen gemessen und per Telemetrie an den Server übermittelt wird oder wobei in jeder Ladestation die aktuelle Einzellast der Ladestation pro Phase kontinuierlich oder in vorgegebenen Zeitabständen eingangs- oder ausgangsseitig gemessen und an den Server zur Ermittlung der Gesamtbelastung jeder Phase übermittelt wird.

Durch die Ermittlung der Lastverteilung, d.h. der Gesamtbelastung jeder Phase über Messabnehmer direkt am Netztransformator des Energieversorgungsunternehmens können zum Lastausgleich fremde Verbraucher berücksichtigt werden, wodurch die Schieflast besser ausgeglichen werden kann.

Durch die erfindungsgemäße Konzeption, welche eine flexible Zuordnung der drei Phasen den drei Ausgangskontakten der Ladestationen vorsieht, wird beim einphasigen Laden eines elektrischen Fahrzeugs sowie bei einer einphasigen Rückspeisung von Strom eine Schieflast in vorteilhafter Weise vermieden.

Durch die Durchführung des erfindungsgemäßen Verfahrens kann gewährleistet werden, dass bevor überhaupt ein Fahrzeug angeschlossen wird, die Phase mit der niedrigsten Gesamtlast mit dem Außenleiterkontakt des Ladesteckers des Fahrzeugs verbunden wird, über den das einphasige Laden oder die Rückspeisung erfolgt. Wie eingangs erläutert, ist es nach dem Stand der Technik der erste Außenleiterkontakt der Ladesteckers. Der hier vorgestellte Lastausgleichsalgorithmus ist auch bei einer anderen Zuordnung des Ladestroms zu einem Außenleiterkontakt des Ladesteckers gültig.

Gemäß der Erfindung wird der beim Laden von Fahrzeugen der Ladestrom erst dann reduziert, wenn alle Phasen ihr Stromlimit erreicht haben, wodurch eine bessere Ausnutzung der zur Verfügung stehenden Gesamtleistung ermöglicht wird.

Die erfindungsgemäße Phasenumschaltung kann auch während eines Lade- oder Rückspeisungsvorgangs durchgeführt werden, wobei zu diesem Zweck beispielsweise ein vorgeschaltetes Schütz vorgesehen ist, welches die Stromversorgung vor einer Phasenumschaltung trennt, und nach der Umschaltung wieder aktiviert. Das Schütz kann erfindungsgemäß auch bei einer Phasenumschaltung außerhalb eines Lade- oder Rückspeisungsvorgangs wie beschrieben verwendet werden.

Die erfindungsgemäße Vorrichtung zum Lastmanagement ist als Vorrichtung zur Phasenumschaltung ausgeführt. Sie umfasst gemäß einer Ausgestaltung der Erfindung vorzugsweise drei DPDT (Double Pole Double Throw, zweipoliger Wechelschalter) Relais, wobei durch eine kaskadierte Umpolung je zweier Phasen mittels der Relais, welche einen Kurzschluss der Phasen inhärent ausschließt, eine geringe Anzahl an Bauteilen benötigt wird. Auf diese Weise werden die Kosten sowie Fehlermöglichkeiten reduziert. Vorzugsweise weist die Vorrichtung zur Phasenumschaltung ein den Relais vorgeschaltetes Schütz auf. DPDT Relais weisen zwei Wechselschalter auf, die gleichzeitig umgelegt werden.

In der Schaltung mit drei Relais kommen DPDT Relais mit zwei Eingängen und zwei Ausgängen zum Einsatz, wobei die beiden Schalterstellungen sich darin unterscheiden, welcher der beiden Eingänge mit welchem der beiden Ausgänge verbunden wird. Der erste und zweite Eingang des ersten Relais sind mit der ersten und zweiten Phase der Ladestation verbunden, wobei der erste Ausgang des ersten Relais mit dem ersten Eingang des dritten Relais verbunden ist und der zweite Ausgang des ersten Relais mit dem ersten Eingang des zweiten Relais verbunden ist. Ferner ist der zweite Eingang des zweiten Relais mit der dritten Phase der Ladestation verbunden, wobei der erste Ausgang des zweiten Relais mit dem dem L2- Außenleiterkontakt des Ladesteckers zugeordneten Ausgangskontakt der Ladestationen verbunden ist. Der zweite Ausgang des zweiten Relais ist mit dem zweiten Eingang des dritten Relais verbunden. Ferner ist der erste Ausgang des dritten Relais mit dem dem L1- Außenleiterkontakt des Ladesteckers zugeordneten Ausgangskontakt verbunden, wobei der zweite Ausgang des dritten Relais mit dem dem L3- Außenleiterkontakt des Ladesteckers zugeordneten Ausgangskontakt der Ladestation verbunden ist. Die Relais und das Schütz werden durch einen Mikrocontroller gesteuert, welcher mit den Vorrichtungen zur Messung der aktuellen Einzellast der Ladestation pro Phase verbunden ist, wenn derartige Vorrichtungen vorgesehen sind.

Alternativ zu der beschriebenen Ausgestaltung der Vorrichtung zur Phasenumschaltung umfassend drei DPDT Relais kann die Vorrichtung zur Phasenumschaltung sechs SPDT (Single Pole Single Throw, einpoliger Wechselschalter) Relais umfassen, wobei jedes Relais der Vorrichtung zur Phasenumschaltung umfassend drei DPDT Relais durch zwei SPDT Relais ersetzt wird, welche jeweils mit der gleichen Ansteuerleitung geschalten werden.

Die Erfindung wird im Folgenden anhand der beigefügten Figuren beispielhaft näher erläutert, wobei die Merkmale detailliert beschrieben werden, die für die vorliegende Erfindung von Bedeutung sind. Es zeigen:
Figur 1: Ein Blockschaltbild einer Ausgestaltung einer Vorrichtung zur Phasenumschaltung gemäß der Erfindung;
Figur 2: Ein Blockschaltbild einer weiteren Ausgestaltung einer Vorrichtung zur Phasenumschaltung gemäß der Erfindung;
Figur 3: Eine Tabelle zur Veranschaulichung der Zuordnung der Phasen zu den Ausgangskontakten der Ladestation in Abhängigkeit der Zustände der Relais bei den Ausgestaltungen gemäß Figuren 1 und 2;
Figur 4: Ein Blockschaltbild einer weiteren Ausgestaltung einer Vorrichtung zur Phasenumschaltung gemäß der Erfindung, bei der sechs Relais vorgesehen sind;
Figur 5: Eine Tabelle zur Veranschaulichung zur Veranschaulichung der Zuordnung der Phasen zu den Ausgangskontakten der Ladestation in Abhängigkeit der Zustände der Relais bei der Ausgestaltung gemäß Figur 4; und
Figur 6: Ein Flussdiagramm zur Veranschaulichung eines erfindungsgemäßen Lastausgleichsalgorith mus.

Die Phasenumschaltung gemäß der Erfindung erfolgt mittels einer in jede Ladestation des Systems integrierten Vorrichtung zum Lastmanagement, welche als Vorrichtung zur Phasenumschaltung ausgeführt ist.

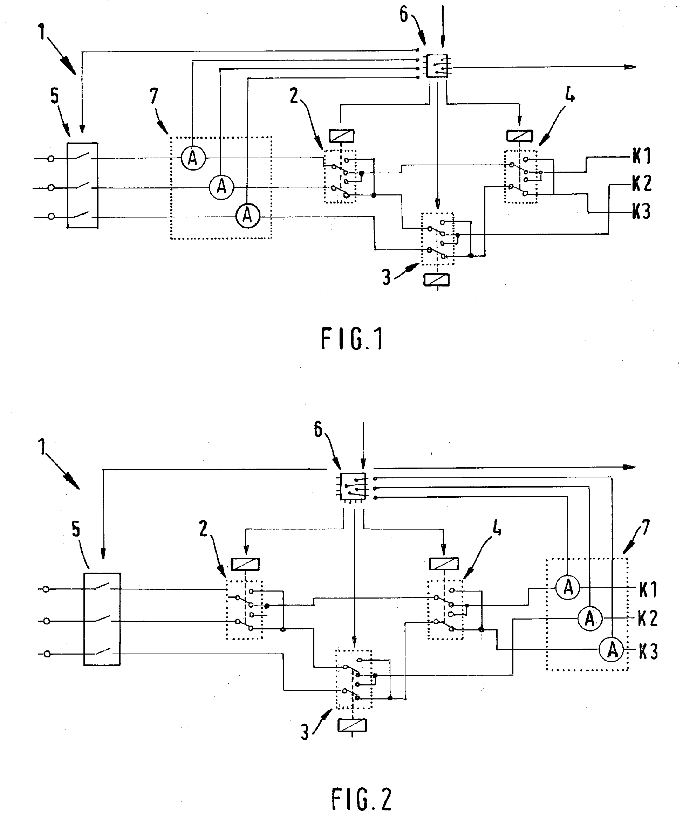

Gemäß einer Ausgestaltung der Erfindung und bezugnehmend auf Figur 1 umfasst eine Vorrichtung zur Phasenumschaltung 1 ein erstes, ein zweites und ein drittes DPDT Relais 2, 3, 4, wobei durch eine kaskadierte Umpolung je zweier Phasen mittels der Relais 2, 3, 4, die in vorteilhafter Weise einen Kurzschluss der Phasen inhärent ausschließt, eine geringe Anzahl an Bauteilen benötigt wird. Ein DPDT Relais weist zwei Wechselschalter auf, die gleichzeitig umgelegt werden.

Die Vorrichtung zur Phasenumschaltung 1 weist ein den Relais 2, 3, 4 vorgeschaltetes Schütz 5 auf, mittels dessen die Stromversorgung vor einer Phasenumschaltung getrennt und nach der Umschaltung wieder aktiviert wird. Des Weiteren weist die Vorrichtung zur Phasenumschaltung 1 einen Mikrocontroller 6 zur Steuerung der Relais und des Schützes sowie bei dem gezeigten Beispiel Vorrichtungen 7 zur Messung der aktuellen Einzellast der Ladestation pro Phase auf, welche den Relais 2, 3, 4 vorgeschaltet sind, so dass die Lastmessung eingangsseitig erfolgt; der Mikrocontroller 6 ist mit den Vorrichtungen 7 zur Messung der aktuellen Einzellast der Ladestation pro Phase verbunden. Ferner ist der Mikrokontroller 6 mit weiteren Komponenten der Ladestation, wie beispielsweise Komponenten zur Ladesteuerung und zur Kommunikation mit einem angeschlossenen Fahrzeug sowie bei dem gezeigten Beispiel über ein Datenübertragungssystem, z.B. über einen Datenbus, mit den Mikrokontrollern der weiteren Ladestationen des Systems verbunden. Das Datenübertragungssystem wird benötigt, wenn die Vorrichtungen 1 zur Phasenumschaltung durch eine der Ladestationen, welche als Master dient, gesteuert werden.

Die Vorrichtungen 7 zur Messung der aktuellen Einzellast der Ladestation pro Phase sind optional und werden benötigt, wenn zur Ermittlung der Gesamtbelastung jeder Phase in jeder Ladestation die aktuelle Einzellast der Ladestation pro Phase kontinuierlich oder in vorgegebenen Zeitabständen gemessen und an eine Master-Ladestation oder an einen Server übermittelt wird.

Bei dem in Figur 1 gezeigten Beispiel sind der erste und zweite Eingang des ersten Relais 2 mit der ersten und zweiten Phase L1, L2 der Ladestation verbunden, wobei der erste Ausgang des ersten Relais 2 mit dem ersten Eingang des dritten Relais 4 verbunden ist und der zweite Ausgang des ersten Relais 2 mit dem ersten Eingang des zweiten Relais 3 verbunden ist.

Wie Figur 1 zu entnehmen ist, ist der zweite Eingang des zweiten Relais 3 mit der dritten Phase L3 der Ladestation verbunden, wobei der erste Ausgang des zweiten Relais 3 mit dem dem L2- Außenleiterkontakt des Ladesteckers zugeordneten Ausgangskontakt K2 der Ladestation verbunden ist. Der zweite Ausgang des zweiten Relais 3 ist mit dem zweiten Eingang des dritten Relais 4 verbunden, wobei der erste Ausgang des dritten Relais 4 mit dem dem L1- Außenleiterkontakt des Ladesteckers zugeordneten Ausgangskontakt K1 verbunden ist und der zweite Ausgang des dritten Relais 4 mit dem dem L3- Außenleiterkontakt des Ladesteckers zugeordneten Ausgangskontakt K3 der Ladestation verbunden ist.

Diese Ausgestaltung eist den Vorteil auf, dass lediglich drei Relais benötigt werden, wobei konstruktionsbedingt ein Kurzschluss der Phasen ausgeschlossen ist, da die zwei einpolige Einschalter, die jedes Relais aufweist, gleichzeitig betätigt werden.

Das in Figur 2 gezeigte Beispiel unterscheidet sich von der Ausgestaltung nach Figur 1 dadurch, dass die Lastmessung ausgangsseitig erfolgt; die Vorrichtungen 7 zur Messung der aktuellen Einzellast der Ladestation pro Phase sind den Relais 2, 3, 4 nachgeschaltet. Wie bereits erläutert, sind die Vorrichtungen 7 zur Messung der aktuellen Einzellast der Ladestation pro Phase optional und werden benötigt, wenn zur Ermittlung der Gesamtbelastung jeder Phase in jeder Ladestation die aktuelle Einzellast der Ladestation pro Phase kontinuierlich oder in vorgegebenen Zeitabständen gemessen und an eine Master-Ladestation oder an einen Server übermittelt wird.

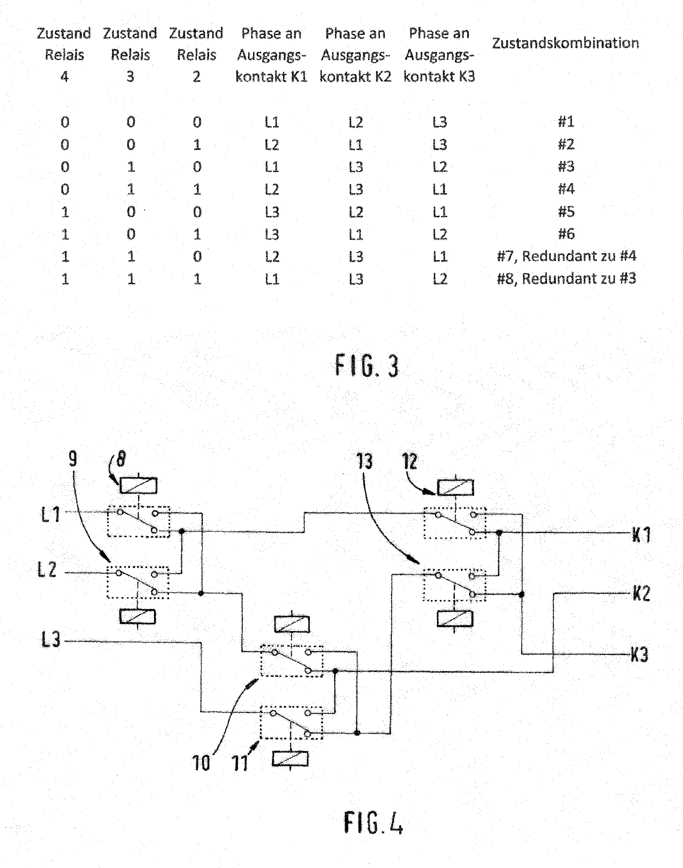

Gegenstand der Figur 3 ist eine Tabelle zur Veranschaulichung der Zuordnung der Phasen L1, L2, L3 zu den Ausgangskontakten K1, K2, K3 der Ladestation in Abhängigkeit der Zustände der Relais 2, 3, 4 bei den Ausgestaltungen gemäß Figuren 1 und 2.

Die ersten drei Spalten enthalten den Zustand des dritten, zweiten und ersten Relais 4, 3, 2, wobei "0" ein inaktives und "1" ein aktives Relais darstellt.

Wenn keines der Relais 2, 3, 4 aktiv ist, d.h. wenn die Relais nicht bestromt sind, liegen an den Ausgangskontakten K1, K2 und K3 der Ladestation jeweils die Phasen L1, L2 und L3 an, was dem Ruhezustand entspricht, der in Figuren 1 und 2 gezeigt ist und als Zustandskombination #1 bezeichnet ist.

Wenn nur das erste Relais 2 aktiv ist, werden dadurch die Phasen L1 und L2 vertauscht, so dass sich die Zustandskombination #2 ergibt. Wenn nur das zweite Relais 3 aktiv ist, werden dadurch die Phasen L2 und L3 vertauscht, so dass sich Zustandskombination #3 ergibt, wobei, wenn nur das dritte Relais 4 aktiv ist, die Phasen L1 und L3 vertauscht werden, so dass sich Zustandskombination #5 ergibt.

Gleichzeitiges aktivieren des ersten Relais 2 und des zweiten Relais 3 bewirkt ein Vertauschen der Phasen L1 und L2 über das erste Relais 2 und ein weiteres Vertauschen der durch die bei aktiviertem ersten Relais 2 am ersten Eingang des zweiten Relais 3 anliegenden Phase L1 mit L3. An den Ausgangskontakten K1, K2, K3 liegt jetzt somit die Kombination L2, L3, L1 an, was der Zustandskombination #4 entspricht.

Gleichzeitiges aktivieren des zweiten Relais 3 und des dritten Relais 4 bewirkt ein Vertauschen der Phasen L2 und L3 über das zweite Relais 3 und ein weiteres Vertauschen der durch die bei aktiviertem zweiten Relais 3 am zweiten Eingang des dritten Relais 4 anliegenden Phase L2 mit L1. An den Ausgangskontakten K1, K2, K3 liegt jetzt somit die Kombination L2, L3, L1 an, was der Zustandskombination #7 entspricht, welche redundant zur Zustandskombination #4 ist.

Gleichzeitiges aktivieren des ersten Relais 2 und des dritten Relais 4 bewirkt ein Vertauschen der Phasen L1 und L2 über das erste Relais 2 und ein weiteres Vertauschen der durch die bei aktiviertem ersten Relais 2 am ersten Eingang des dritten Relais 4 anliegenden Phase L2 mit L3. An den Ausgangskontakten K1, K2, K3 liegt jetzt somit die Kombination L3, L1, L2 an, was der Zustandskombination #6 entspricht.

Ein gleichzeitiges aktivieren sämtlicher Relais führt zur Zustandskombination #8, welche redundant zur Zustandskombination #3 ist

Bei fehlerfreier Funktion der Relais kann bei dieser Ausgestaltung in vorteilhafter Weise durch eine fehlerhafte Ansteuerung oder Ansteuerungskombination kein Kurzschluss entstehen.

Gegenstand der Figur 4 ist eine Ausgestaltung einer Vorrichtung zur Phasenumschaltung 1, die sich von der Ausgestaltung nach Figuren 1 und 2 dadurch unterscheidet, dass die DPDT Relais durch jeweils zwei SPDT Relais ersetzt sind, welche jeweils mit der gleichen Ansteuerleitung mittels des Mikrocontrollers 6 geschalten werden. Ein SPDT Relais weist einen Wechselschalter auf. Das vorgesehene Schütz ist nicht dargestellt, wobei die ebenfalls nicht dargestellten und wie bereits erläutert optionalen Vorrichtungen zur Messung der aktuellen Einzellast der Ladestation pro Phase den Relais vor- oder nachgeschaltet sein können.

Bezugnehmend auf Figur 4 umfasst die Vorrichtung zur Phasenumschaltung 1 ein erstes und ein zweites Relais 8, 9, die gemeinsam ansteuerbar sind, ein drittes und ein viertes Relais 10, 11, die gemeinsam ansteuerbar sind und ein fünftes und ein sechstes Relais 12, 13, die gemeinsam ansteuerbar sind.

Auch bei der erfindungsgemäß gemeinsamen Ansteuerung der Relaispaare kann bei dieser Ausgestaltung ein Kurzschluss nicht ausgeschlossen werden, da die Wechselschalter nicht gemeinsam mechanisch geführt werden, so dass es passieren kann, dass die Wechselschalter der zwei geschalteten Relais nicht gleichzeitig umgelegt werden und ein Kurzschluss zwischen zwei Phasen entsteht. Wenn beispielsweise der Wechselschalter des ersten Relais etwas schneller als der Wechselschalter des zweiten Relais umgelegt wird, entsteht ein Kurzschluss zwischen den Phasen L1 und L2. Aus diesem Grunde muss eine Umschaltung lastfrei erfolgen, was mittels des vorgeschalteten Schützes, das die Versorgung vor einer Umschaltung trennt und nach der Umschaltung wieder aktiviert, gewährleistet wird.

Bei dem in Figur 4 gezeigten Beispiel ist der Eingang des ersten Relais 8 mit der ersten Phase L1 der Ladestation verbunden, wobei der Eingang des zweiten Relais 9 mit der zweiten Phase L2 der Ladestation verbunden ist.

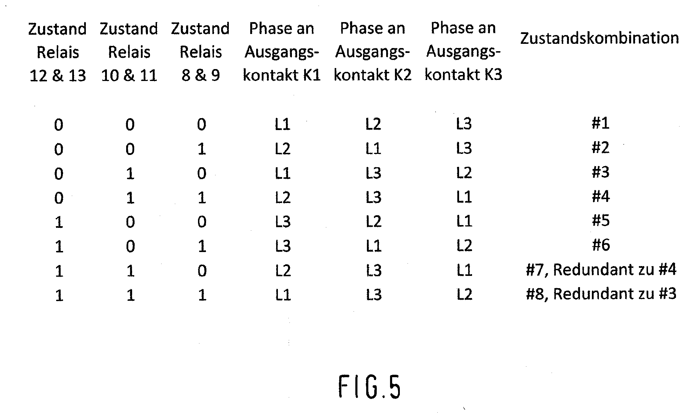

Ferner ist der Ausgang des ersten Relais 8 mit dem Eingang des fünften Relais 12 verbunden und der Ausgang des zweiten Relais 9 ist mit dem Eingang des dritten Relais 10 verbunden. Wie Figur 5 zu entnehmen ist, ist der Eingang des vierten Relais 11 mit der dritten Phase L3 der Ladestation verbunden, wobei der Ausgang des dritten Relais 10 mit dem dem L2- Außenleiterkontakt des Ladesteckers zugeordneten Ausgangskontakt K2 der Ladestation verbunden ist. Der Ausgang des vierten Relais 11 ist mit dem Eingang des sechsten Relais 13 verbunden, wobei der Ausgang des fünften Relais 12 mit dem dem L1- Außenleiterkontakt des Ladesteckers zugeordneten Ausgangskontakt K1 verbunden ist und der Ausgang des sechsten Relais 13 mit dem dem L3- Außenleiterkontakt des Ladesteckers zugeordneten Ausgangskontakt K3 der Ladestation verbunden ist.

Gegenstand der Figur 5 ist eine Tabelle zur Veranschaulichung der Zuordnung der Phasen L1, L2, L3 zu den Ausgangskontakten K1, K2, K3 der Ladestation in Abhängigkeit der Zustände der Relais 8, 9, 10, 1, 12, 13 bei den Ausgestaltungen gemäß Figur 4.

Die Tabelle entspricht der Tabelle gemäß Figur 3, wobei die dritte Spalte den Zustand des ersten und zweite Relais 8, 9, die zweite Spalte den Zustand des dritten und vierten Relais 10, 11 und die erste Spalte den Zustand des vierten und fünften Relais 12, 13 enthält; "0" stellt ein inaktives und "1" ein aktives Relais dar.

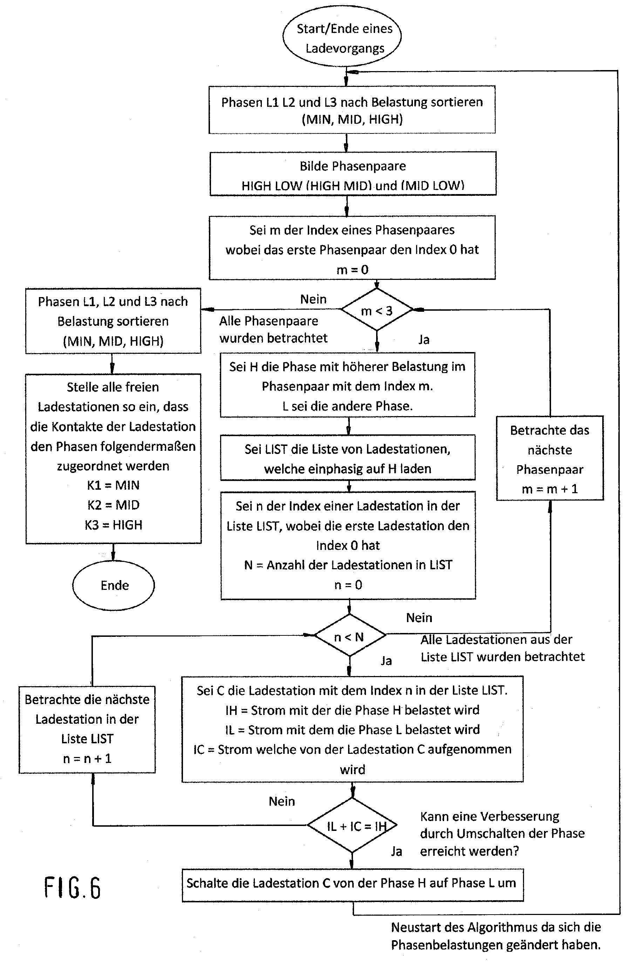

Gemäß der Erfindung und bezugnehmend auf Figur 6 kann eine bevorzugte Ausgestaltung des Verfahrens zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen folgende Schritte umfassen:
Wenn ein Lade- oder Rückspeisungsvorgang bei einer der Ladestationen des Systems beginnt oder beendet wird, wird
a) die Gesamtbelastung jeder Phase ermittelt, wobei
b) anhand der Gesamtbelastung der Phasen die Phasen nach Belastung (LOW, MID, HIGH) sortiert werden und
c) drei Phasenpaare (HIGH, LOW), (HIGH, MID) und (MID, LOW) gebildet werden, wobei die Phasenpaare jeweils den Index m= 0, 1, 2 aufweisen, wobei
d) anschließend beginnend bei m=0 für ein Phasenpaar folgende Schritte durchgeführt werden:
e) Ermitteln der Phase H mit der höheren Belastung und der Phase L mit der niedrigeren Belastung;
f) Ermitteln der Liste LIST der Ladestationen, welche einphasig auf der Phase H mit der höheren Belastung laden oder Strom zurückspeisen, wobei N die Anzahl der Ladestationen in der Liste LIST ist und n der Index dieser Ladestationen, wobei die erste Ladestation den Index 0 aufweist;
g) beginnend bei n=0 in der Liste LIST der Summe I_{L} + I_{C}, wobei I_{L} der Strom ist, mit dem die Phase L belastet wird und I_{C} der Strom ist, der von der Ladestation aufgenommen oder an die Ladestation abgegeben wird, wobei,
h) wenn die Summe I_{L} + I_{C} kleiner ist, als der Strom I_{H}, mit dem die Phase H belastet ist, erkannt wird, dass durch eine Phasenumschaltung von der Phase H auf die Phase L eine Lastoptimierung erzielt wird eine Phasenumschaltung durchgeführt wird und zum Schritt a) übergegangen wird, wobei, wenn die Summe I_{L} + I_{C} nicht kleiner ist, als der Strom I_{H}, mit dem die Phase H belastet ist, die nächste Ladestation in der Liste LIST betrachtet wird und zum Schritt g) für die nächste Ladestation in der Liste LIST übergegangen wird, wenn der Index N der nächsten Ladestation kleiner als N ist, wobei wenn alle Ladestationen in der Liste LIST betrachtet worden sind, das nächste Phasenpaar betrachtet wird, wenn der Index m des nächsten Phasenpaares kleiner als 3 ist, wobei, wenn der Index m des nächsten Phasenpaares nicht kleiner als 3 ist, alle Phasenpaare betrachtet worden sind und alle freien Ladestationen - falls vorhanden - derart eingestellt werden, dass die Phase MIN mit der niedrigsten Gesamtlast an dem dem L1-Außenleiterkontakt des Ladesteckers zugeordneten Ausgangskontakt K1 anliegt, wobei die nächst geringbelastete Phase MID an dem dem L2-Außenleiterkontakt des Ladesteckers zugeordneten Ausgangskontakt K2 anliegt und die am höchsten belastete Phase HIGH an dem dem L3-Außenleiterkontakt des Ladesteckers zugeordneten Ausgangskontakt K3 anliegt.

Der Schritt, wonach alle freien Ladestationen - falls vorhanden - derart eingestellt werden, dass die Phase MIN mit der niedrigsten Gesamtlast an dem dem L1-Außenleiterkontakt des Ladesteckers zugeordneten Ausgangskontakt K1 anliegt, wobei die nächst geringbelastete Phase MID an dem dem L2- Außenleiterkontakt des Ladesteckers zugeordneten Ausgangskontakt K2 anliegt und die am höchsten belastete Phase HIGH an dem dem L3- Außenleiterkontakt des Ladesteckers zugeordneten Ausgangskontakt K3 anliegt, ist optional.

Gemäß einer Ausgestaltung erfolgt bei gleicher Last zweier Phasen die Reihenfolge der Zuordnung zu den K1, K2, K3 Ausgangskontakten der Ladestationen und somit zu den Außenleiterkontakten L1, L2, L3 des Ladesteckers in steigender Reihenfolge der Phasen, beispielsweise L1, L2 oder L2, L3. Bei gleicher Last sämtlicher Phasen erfolgt die Reihenfolge der Zuordnung zu den K1, K2, K3 Ausgangskontakten der Ladestationen und somit zu den Außenleiterkontakten L1, L2, L3 des Ladesteckers in der Reihenfolge L1, L2, L3, insbesondere unter den Annahme, dass das einphasige Laden der Fahrzeuge über den Außenleiterkontakt L1 der Ladestecker erfolgt.

Wenn beispielsweise unter den Annahme, dass das einphasige Laden der Fahrzeuge über den Außenleiterkontakt L1 der Ladestecker erfolgt, beispielsweise ein Auto an der ersten Ladestation angeschlossen wird, wird in allen anderen freien Ladestationen gemäß der Erfindung eine Phasenumschaltung durchgeführt, derart dass die Phasen L2, L3 und L1 jeweils den Ausgangskontakten K1, K2, K3 der Ladestationen und somit den L1-, L2- und L3- Außenleiterkontakten der Ladestecker zugeordnet werden. Wenn ein weiteres Fahrzeug an einer Ladestation des Systems angeschlossen wird, wird es über die Phase L2 am L1 Außenleiterkontakt des Ladesteckers geladen, wobei erfindungsgemäß bei allen anderen freien Ladestationen die Phasen L3, L1 und L2 jeweils den Ausgangskontakten K1, K2, K3 der Ladestationen zugeordnet werden. Wenn ein drittes Fahrzeug an einer Ladestation des Systems angeschlossen wird, wird es über die Phase L3 am L1 Außenleiterkontakt des Ladesteckers geladen, wobei bei allen anderen freien Ladestationen die Phasen L1, L2 und L3 jeweils den Ausgangskontakten K1, K2, K3 der Ladestationen zugeordnet werden.

Wenn alle Ladestationen belegt sind und alle Autos wegfahren, die über die Phase L1 geladen wurden, entsteht eine Schieflast an L2 und L3, da die Phase L1 lastfrei ist. Erfindungsgemäß wird eine Phasenumschaltung während des Ladevorgangs durchgeführt, wobei die Stromversorgung zu den Autos durch das Schütz während der Phasenumschaltung deaktiviert wird. Durch die Phasenumschaltung werden die Phasen an die Ausgangskontakte K1, K2, K3 umverteilt, derart, dass eine Schieflast weitgehend reduziert wird.

Zur Durchführung des erfindungsgemäßen Verfahrens ist gemäß einer Ausgestaltung der Erfindung ein datentechnisch mit den Ladestationen und insbesondere den Mikrocontrollern der Vorrichtungen zur Phasenumschaltung verbundener Server vorgesehen, welcher die Vorrichtungen zur Phasenumschaltung insbesondere die Relais und das Schütz steuert, wobei die Gesamtbelastung jeder Phase entweder über Messabnehmer direkt am Netztransformator des Energieversorgungsunternehmens kontinuierlich oder in vorgegebenen Zeitabständen gemessen und per Telemetrie an den Server übermittelt wird oder wobei in jeder Ladestation die aktuelle Einzellast der Ladestation pro Phase kontinuierlich oder in vorgegebenen Zeitabständen eingangs- oder ausgangsseitig gemessen und an den Server zur Ermittlung der Gesamtbelastung jeder Phase übermittelt wird.

Alternativ dient eine der Ladestationen als Master, welche die Steuerung der eigenen Vorrichtung zur Phasenumschaltung und der Vorrichtungen zur Phasenumschaltung der weiteren Ladestationen übernimmt. Hierbei wird die Gesamtbelastung jeder Phase entweder über Messabnehmer direkt am Netztransformator des Energieversorgungsunternehmens kontinuierlich oder in vorgegebenen Zeitabständen gemessen und per Telemetrie an die als Master dienende Ladestation übermittelt wird oder es wird in jeder Ladestation die aktuelle Einzellast der Ladestation pro Phase eingangs- oder ausgangsseitig kontinuierlich oder in vorgegebenen Zeitabständen gemessen und an die als Master dienende Ladestation zur Ermittlung der Gesamtbelastung jeder Phase übermittelt. Hierbei sind die Ladestationen über ein Datenübertragungssystem miteinander verbunden.

## Patentansprüche

1. Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen, wobei die Ladestationen Ausgangskontakte (K1, K2, K3) aufweisen, welche den Außenleiterkontakten der Ladestecker der elektrischen Fahrzeuge zugeordnet sind, **dadurch gekennzeichnet, dass** in Abhängigkeit der Gesamtbelastung jeder Phase die Phasen an die Ausgangskontakte (K1, K2, K3) mittels einer in jeder Ladestation vorgesehenen Vorrichtung zum Lastmanagement, die als Vorrichtung zur Phasenumschaltung (1) ausgeführt ist, umgeschaltet werden, derart, dass eine Schieflast reduziert wird.

2. Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen nach Anspruch 1, **dadurch gekennzeichnet, dass** die Vorrichtungen (1) zur Phasenumschaltung durch eine der Ladestationen, welche als Master dient, gesteuert werden, wobei die Informationen bezüglich der Gesamtbelastung jeder Phase entweder über Messabnehmer direkt am Netztransformator des Energieversorgungsunternehmens und per Telemetrie an die als Master dienende Ladestation übermittelt werden oder wobei in jeder Ladestation die aktuelle Einzellast der Ladestation pro Phase gemessen und an die als Master dienende Ladestation zur Ermittlung der Gesamtbelastung jeder Phase übermittelt wird.

3. Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen nach Anspruch 1, **dadurch gekennzeichnet, dass** die Vorrichtungen (1) zur Phasenumschaltung durch einen datentechnisch mit den Ladestationen verbundener Server gesteuert werden, wobei die Informationen bezüglich der Gesamtbelastung jeder Phase entweder über Messabnehmer direkt am Netztransformator des Energieversorgungsunternehmens und per Telemetrie an den Server übermittelt werden oder wobei in jeder Ladestation die aktuelle Einzellast der Ladestation pro Phase gemessen und an den Server zur Ermittlung der Gesamtbelastung jeder Phase übermittelt wird.

4. Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen nach Anspruch 1, 2 oder 3, **dadurch gekennzeichnet, dass** die Stromversorgung zu den Ausgangskontakten (K1, K2, K3) einer Ladestation vor einer Phasenumschaltung getrennt und nach der Umschaltung wieder aktiviert wird.

5. Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen nach Anspruch 4, **dadurch gekennzeichnet, dass** die Stromversorgung zu den Ausgangskontakten (K1, K2, K3) einer Ladestation vor einer Phasenumschaltung getrennt und nach der Umschaltung wieder aktiviert wird, wenn die Phasenumschaltung während eines Ladevorgangs erfolgt.

6. Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen nach einem der vorangehenden Ansprüche, **dadurch gekennzeichnet, dass** wenn ein Lade- oder Rückspeisungsvorgang bei einer der Ladestationen des Systems beginnt oder beendet wird,
a) die Gesamtbelastung jeder Phase ermittelt wird, wobei
b) anhand der Gesamtbelastung der Phasen die Phasen nach Belastung (LOW, MID, HIGH) sortiert werden und
c) drei Phasenpaare (HIGH, LOW), (HIGH, MID) und (MID, LOW) gebildet werden, wobei die Phasenpaare jeweils den Index m= 0, 1, 2 aufweisen, wobei
d) anschließend beginnend bei m=0 für ein Phasenpaar folgende Schritte durchgeführt werden:
e) Ermitteln der Phase H mit der höheren Belastung und der Phase L mit der niedrigeren Belastung;
f) Ermitteln der Liste LIST der Ladestationen, welche einphasig auf der Phase H mit der höheren Belastung laden oder Strom zurückspeisen, wobei N die Anzahl der Ladestationen in der Liste LIST ist und n der Index dieser Ladestationen, wobei die erste Ladestation den Index 0 aufweist;
g) beginnend bei n=0 in der Liste LIST Bilden der Summe I_{L} + I_{C}, wobei I_{L} der Strom ist, mit dem die Phase L belastet wird und Ic der Strom ist, der von der Ladestation aufgenommen oder an die Ladestation abgegeben wird, wobei,
h) wenn die Summe I_{L} + I_{C} kleiner ist, als der Strom I_{H}, mit dem die Phase H belastet ist, erkannt wird, dass durch eine Phasenumschaltung von der Phase H auf die Phase L eine Lastoptimierung erzielt wird eine Phasenumschaltung durchgeführt wird und zum Schritt a) übergegangen wird, wobei, wenn die Summe I_{L} + I_{C} nicht kleiner ist, als der Strom I_{H}, mit dem die Phase H belastet ist, die nächste Ladestation in der Liste LIST betrachtet wird und zum Schritt g) für die nächste Ladestation in der Liste LIST übergegangen wird, wenn der Index N der nächsten Ladestation kleiner als N ist, wobei wenn alle Ladestationen in der Liste LIST betrachtet worden sind, das nächste Phasenpaar betrachtet wird, wenn der Index m des nächsten Phasenpaares kleiner als 3 ist, wobei wenn der Index m des nächsten Phasenpaares nicht kleiner als 3 ist, alle Phasenpaare betrachtet worden sind und das Verfahren beendet wird.

7. Verfahren zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen nach Anspruch 6, **dadurch gekennzeichnet, dass** wenn der Index m des nächsten Phasenpaares nicht kleiner als 3 ist, alle Phasenpaare betrachtet worden sind und alle freien Ladestationen - falls vorhanden - derart eingestellt werden, dass die Phase MIN mit der niedrigsten Gesamtlast an dem dem L1- Außenleiterkontakt des Ladesteckers zugeordneten Ausgangskontakt K1 anliegt, wobei die nächst geringbelastete Phase MID an dem dem L2- Außenleiterkontakt des Ladesteckers zugeordneten Ausgangskontakt K2 anliegt und die am höchsten belastete Phase HIGH an dem dem L3- Außenleiterkontakt des Ladesteckers zugeordneten Ausgangskontakt K3 anliegt.

8. Vorrichtung (1) zum Lastmanagement beim Laden von elektrischen Fahrzeugen oder bei der Rückspeisung von Strom aus elektrischen Fahrzeugen zurück in das Stromnetz bei einem System umfassend zumindest zwei Ladestationen, insbesondere zur Durchführung des Verfahrens nach einem der vorangehenden Ansprüche, **dadurch gekennzeichnet, dass** sie als in die Ladestationen integrierte Vorrichtung zur Phasenumschaltung (1) ausgeführt ist.

9. Vorrichtung (1) zum Lastmanagement nach Anspruch 8, **dadurch gekennzeichnet, dass** sie ein erstes, ein zweites und ein drittes DPDT Relais (2, 3, 4) Relais mit zwei Eingängen und zwei Ausgängen, ein den Relais vorgeschaltetes Schütz (5) und einen Mikrocontroller (6) zur Steuerung der Relais und des Schützes (5) umfasst, wobei der erste und zweite Eingang des ersten Relais (2) mit der ersten und zweiten Phase L1, L2 der Ladestation verbunden sind, wobei der erste Ausgang des ersten Relais (2) mit dem ersten Eingang des dritten Relais (4) verbunden ist und der zweite Ausgang des ersten Relais (2) mit dem ersten Eingang des zweiten Relais (3) verbunden ist, wobei der zweite Eingang des zweiten Relais (3) mit der dritten Phase L3 der Ladestation verbunden ist, wobei der erste Ausgang des zweiten Relais (3) mit dem dem L2- Außenleiterkontakt des Ladesteckers zugeordneten Ausgangskontakt (K2) der Ladestation verbunden ist, wobei der zweite Ausgang des zweiten Relais (3) mit dem zweiten Eingang des dritten Relais (4) verbunden ist und der erste Ausgang des dritten Relais (4) mit dem dem L1- Außenleiterkontakt des Ladesteckers zugeordneten Ausgangskontakt (K1) verbunden ist und wobei der zweite Ausgang des dritten Relais (4) mit dem dem L3- Außenleiterkontakt des Ladesteckers zugeordneten Ausgangskontakt (K3) der Ladestation verbunden ist.

10. Vorrichtung (1) zum Lastmanagement nach Anspruch 8, **dadurch gekennzeichnet, dass** sie ein erstes und ein zweites Relais (8, 9), die gemeinsam ansteuerbar sind, ein drittes und ein viertes Relais (10, 11), die gemeinsam ansteuerbar sind, ein fünftes und ein sechstes Relais (12, 13), die gemeinsam ansteuerbar sind, ein den Relais vorgeschaltetes Schütz (5) und einen Mikrocontroller (6) zur Steuerung der Relais und des Schützes (5) umfasst, wobei der Eingang des ersten Relais (8) mit der ersten Phase L1 der Ladestation verbunden ist, wobei der Eingang des zweiten Relais (9) mit der zweiten Phase L2 der Ladestation verbunden ist, wobei der Ausgang des ersten Relais (8) mit dem Eingang des fünften Relais (12) verbunden und der Ausgang des zweiten Relais (9) mit dem Eingang des dritten Relais (10) verbunden ist, wobei der Eingang des vierten Relais (11) mit der dritten Phase L3 der Ladestation verbunden ist und der Ausgang des dritten Relais (10) mit dem dem L2- Außenleiterkontakt des Ladesteckers zugeordneten Ausgangskontakt (K2) der Ladestation verbunden ist, wobei der Ausgang des vierten Relais (11) mit dem Eingang des sechsten Relais (13) verbunden ist, wobei der Ausgang des fünften Relais (12) mit dem dem L1-Außenleiterkontakt des Ladesteckers zugeordneten Ausgangskontakt (K1) verbunden und der Ausgang des sechsten Relais (13) mit dem dem L3-Außenleiterkontakt des Ladesteckers zugeordneten Ausgangskontakt (K3) der Ladestation verbunden ist.

11. Vorrichtung (1) zum Lastmanagement nach Anspruch 9 oder 10, **dadurch gekennzeichnet, dass** sie Vorrichtungen (7) zur Messung der aktuellen Einzellast der Ladestation pro Phase aufweist, welche mit dem Mikrokontroller (6) verbunden und den Relais (2, 3, 4) vor- oder nachgeschaltet sind.
